# EUROPEAN PATENT APPLICATION

(11) **EP 2 713 548 A1**
(43) Date of publication of application: **02.04.2014**
(21) Application number: 12814895.4
(22) Date of filing: 25.06.2012
(51) Int. Cl.: H04L 9/32

(54) **KEY GENERATION, BACKUP AND MIGRATION METHOD AND SYSTEM BASED ON TRUSTED COMPUTING**

(30) Priority: 21.07.2011 CN 201110205512
(71) Applicant: Huawei Technologies Co., Ltd, Shenzhen, Guangdong 518129 (CN); Peking University, Beijing 100871 (CN)
(72) Inventor: SHEN, Qingni, Beijing 100871 (CN); YANG, Yahui, Beijing 100871 (CN); YANG, Xin, Beijing 100871 (CN); XU, Lei, Shenzhen Guangdong 518129 (CN)
(74) Representative: Körber, Martin Hans
(86) International application number: PCT/CN2012/077404
(87) International publication number: WO 2013/010427

(57) **Abstract**

The present invention is applicable to the field of computer technologies and discloses a method and a system for key generation, backup, and migration based on trusted computing, including: receiving a key generation request input by a user; controlling a trusted platform module to generate a platform migratable key, encrypting the platform migratable key by using a public key of a root key of the trusted platform module, and storing a cipher-text key of the platform migratable key; controlling the trusted platform module to generate a user migratable key, encrypting the user migratable key by using a public key of the platform migratable key, and storing a cipher-text key of the user migratable key; and controlling the trusted platform module to generate a binding key of the user, encrypting the binding key by using a public key of the user migratable key, and storing a cipher-text key of the binding key. The present invention implements key generation, backup, restoration, and migration by using a trusted computing module based on trusted computing, which enhances security of a key during key generation, backup, restoration, and migration.

## Description

### TECHNICAL FIELD

The present invention pertains to the field of computer technologies, and in particular, relates to a method and a system for key generation, backup, and migration based on trusted computing.

### BACKGROUND

Cloud storage (Cloud Storage) is a new concept extended and developed on the basis of a cloud computing (Cloud Computing) concept. It refers to a system that uses application software to enable a large number of various storage devices on a network to work together by employing such functions as a cluster application, network grid technology, or distributed file system to externally provide unified data storage and service access functions.

As cloud computing and cloud storage products are launched continuously, requirements for data security in the cloud become increasingly higher. When data is stored in the cloud, the data is faced with various security threats, which are mainly as follows: Firstly, a user can hardly use an effective technical means to ensure that a cloud storage service provider (who has absolute rights to control a computer where the user stores data) does not illegally acquire and use data stored by the user; secondly, because data is stored in a cloud storage device, which is different from storage in a personal computer of a user, data of one user may be closely adjacent to data of another user, so that a user can illegally access or steal data of a neighboring user by using various means; thirdly, similar to data in a traditional storage system, the data in the cloud may also be stolen by a hacker. However, the prior art cannot provide an effective data encryption manner to ensure the data security of users in the cloud storage. As a result, the data security in the cloud storage is low and private data of users cannot be protected properly, which hinders further development of cloud storage services.

### SUMMARY

An objective of embodiments of the present invention is to provide a method for key generation based on trusted computing to solve the problem in the prior art that data security in cloud storage is poor due to a lack of an efficient data encryption manner used to ensure user data security in the cloud storage.

Embodiments of the present invention are implemented as follows: A method for key generation based on trusted computing includes the following steps:
receiving a key generation request input by a user;
controlling a trusted platform module to generate a platform migratable key, encrypting the platform migratable key by using a public key of a root key of the trusted platform module, and storing a cipher-text key of the platform migratable key;
controlling the trusted platform module to generate a user migratable key of the user, encrypting the user migratable key by using a public key of the platform migratable key, and storing a cipher-text key of the user migratable key; and
controlling the trusted platform module to generate a binding key of the user, encrypting the binding key by using a public key of the user migratable key, and storing a cipher-text key of the binding key.

Another objective of embodiments of the present invention is to provide a system for key generation based on trusted computing, where the system includes:
a generation request receiving unit, configured to receive a key generation request input by a user;
a first key generating unit, configured to control a trusted platform module to generate a platform migratable key, encrypt the platform migratable key by using a public key of a root key of the trusted platform module, and store a cipher-text key of the platform migratable key;
a second key generating unit, configured to control the trusted platform module to generate a user migratable key of the user, encrypt the user migratable key by using a public key of the platform migratable key, and store a cipher-text key of the user migratable key; and
a third key generating unit, configured to control the trusted platform module to generate a binding key of the user, encrypt the binding key by using a public key of the user migratable key, and store a cipher-text key of the binding key.

Another objective of embodiments of the present invention is to provide a method for key backup based on trusted computing, where the method includes the following steps:
receiving a request for backing up a migratable key, where the request is input by a user, and the migratable key is a platform migratable key, a user migratable key, or a binding key;
controlling a trusted platform module to acquire a private key of the migratable key, and performing OAEP encoding on the acquired private key of the migratable key;
controlling the trusted platform module to generate a random number, and performing an exclusive-OR operation on the random number and the private key of the migratable key after the OAEP encoding; and
encrypting result data of the exclusive-OR operation by using a public key provided by a backup server, so as to obtain backup data of the migratable key, and sending the backup data to the backup server.

Another objective of embodiments of the present invention is to provide a system for key backup based on trusted computing, where the system includes:
a backup request receiving unit, configured to receive a request for backing up a migratable key, where the request is input by a user, and the migratable key is a platform migratable key, a user migratable key, or a binding key;
a first encoding unit, configured to control a trusted platform module to acquire a private key of the migratable key, and perform OAEP encoding on the acquired private key of the migratable key;
a first exclusive-OR operation unit, configured to control the trusted platform module to generate a random number, and perform an exclusive-OR operation on the random number and the private key of the migratable key after the OAEP encoding; and
a backup data sending unit, configured to encrypt result data of the exclusive-OR operation by using a public key provided by a backup server, so as to obtain backup data of the migratable key, and send the backup data to the backup server.

Another objective of embodiments of the present invention is to provide a method for key backup restoration based on trusted computing, where the method includes the following steps:
receiving a request for backup restoration of a migratable key, where the request is input by a user, and the migratable key is a platform migratable key, a user migratable key, or a binding key;
controlling a trusted platform module to acquire a private key that corresponds to a public key used for backing up the migratable key, and decrypting stored backup data of the migratable key;
performing an exclusive-OR operation on a prestored random number and the decrypted backup data to obtain a plain-text key of the migratable key; and
encrypting the plain-text key by using the public key used for backing up the migratable key, and storing a cipher-text key of the migratable key.

Another objective of embodiments of the present invention is to provide a system for key backup restoration based on trusted computing, where the system includes:
a backup restoration requesting unit, configured to receive a request for backup restoration of a migratable key, where the request is input by a user, and the migratable key is a platform migratable key, a user migratable key, or a binding key;
a backup data decrypting unit, configured to control a trusted platform module to acquire a private key that corresponds to a public key used for backing up the migratable key, and decrypt stored backup data of the migratable key;
a plain-text key acquiring unit, configured to perform an exclusive-OR operation on a prestored random number and the decrypted backup data to acquire a plain-text key of the migratable key; and
a key storing unit, configured to encrypt the plain-text key by using the public key used for backing up the migratable key, and store a cipher-text key of the migratable key.

Another objective of embodiments of the present invention is to provide a method for key migration based on trusted computing, where the method includes the following steps:
receiving a request for migrating a migratable key, where the request is input by a user, and the migratable key is a platform migratable key, a user migratable key, or a binding key;
controlling a trusted platform module to acquire a private key of the migratable key, and performing OAEP encoding on the acquired private key of the migratable key;
controlling the trusted platform module to generate a random number, and performing an exclusive-OR operation on the random number and the private key of the migratable key after the OAEP encoding; and
encrypting result data of the exclusive-OR operation by using a public key provided by a migration destination server, so as to obtain migration cipher-text data of the migratable key, and sending the migration cipher-text data to the migration destination server.

Another objective of embodiments of the present invention is to provide a system for key migration based on trusted computing, where the system includes:
a migration request receiving unit, configured to receive a request for migrating a migratable key, where the request is input by a user, and the migratable key is a platform migratable key, a user migratable key, or a binding key;
a second encoding unit, configured to control a trusted platform module to acquire a private key of the migratable key, and perform OAEP encoding on the acquired private key of the migratable key;
a second exclusive-OR operation unit, configured to control the trusted platform module to generate a random number, and perform an exclusive-OR operation on the random number and the private key of the migratable key after the OAEP encoding; and
a migration data sending unit, configured to encrypt result data of the exclusive-OR operation by using a public key provided by a migration destination server, so as to obtain migration cipher-text data of the migratable key, and send the migration cipher-text data to the migration destination server.

In the embodiments of the present invention, key generation, backup, restoration, and migration are implemented by using a trusted computing module based on trusted computing; layer-by-layer encryption and storage of a generated key is implemented by using a root key of the trusted computing module, thereby ensuring security of the generated key; the security of the key during the backup and migration is ensured by using OAEP encoding and encryption technologies; and security of a restored key is ensured by using decryption, a random number, an exclusive-OR operation, an encryption technology, and the like during the key restoration.

### BRIEF DESCRIPTION OF DRAWINGS

To describe the technical solutions in the embodiments of the present invention more clearly, the following briefly describes the accompanying drawings for describing the embodiments. Apparently, the accompanying drawings in the following description show some embodiments of the present invention, and persons of ordinary skill in the art may still derive other drawings from these accompanying drawings without creative efforts.
FIG. 1 is an implementation flowchart of a method for key generation based on trusted computing according to a first embodiment of the present invention;
FIG. 2 is a diagram illustrating a specific instance of a key tree established by using the method for key generation based on trusted computing according to the first embodiment of the present invention;
FIG. 3 is an implementation flowchart of a method for key generation based on trusted computing according to a second embodiment of the present invention;
FIG. 4 is a structural diagram of a system for key generation based on trusted computing according to a third embodiment of the present invention;
FIG. 5 is a structural diagram of a system for key generation based on trusted computing according to a fourth embodiment of the present invention;
FIG. 6 is a structural diagram of a migration authorizing unit according to the fourth embodiment of the present invention;
FIG. 7 is an implementation flowchart of a method for key backup based on trusted computing according to a fifth embodiment of the present invention;
FIG. 8 is an implementation flowchart of a method for key backup based on trusted computing according to a sixth embodiment of the present invention;
FIG. 9 is a structural diagram of a system for key backup based on trusted computing according to a seventh embodiment of the present invention;
FIG. 10 is a structural diagram of a system for key backup based on trusted computing according to an eighth embodiment of the present invention;
FIG. 11 is a structural diagram of a first authorization authenticating unit according to the eighth embodiment of the present invention;
FIG. 12 is an implementation flowchart of a method for key backup restoration based on trusted computing according to a ninth embodiment of the present invention;
FIG. 13 is a structural diagram of a system for key backup restoration based on trusted computing according to a tenth embodiment of the present invention;
FIG. 14 is an implementation flowchart of a method for key backup and migration based on trusted computing according to an eleventh embodiment of the present invention;
FIG. 15 is an implementation flowchart of a method for key backup and migration based on trusted computing according to a twelfth embodiment of the present invention;
FIG. 16 is a structural diagram of a system for key migration based on trusted computing according to a thirteenth embodiment of the present invention;
FIG. 17 is a structural diagram of a system for key migration based on trusted computing according to a fourteenth embodiment of the present invention; and

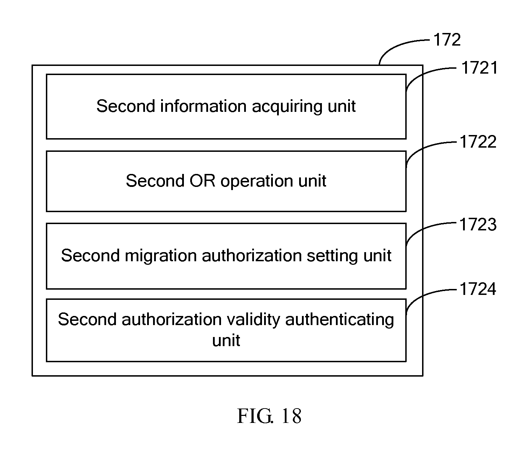

FIG. 18 is a structural diagram of a second authorization authenticating unit according to the fourteenth embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the first embodiment of the present invention without creative efforts shall fall within the protection scope of the present invention.

In the embodiments of the present invention, key generation, backup, restoration, and migration are implemented by using a trusted computing module based on trusted computing; layer-by-layer encryption and storage of a generated key is implemented by using a root key of the trusted computing module, thereby ensuring security of the generated key; the security of the key during the backup and migration is ensured by using OAEP encoding and encryption technologies; and security of a restored key is ensured by using decryption, a random number, an exclusive-OR operation, an encryption technology, and the like during the key restoration.

Specific implementation of the present invention is described in detail with reference to specific embodiments below.

### Embodiment 1

A trusted platform module (Trust platform module, abbreviated as TPM) is a new embedded security subsystem arranged in a computer to protect security of a terminal platform by using such functions as public key authentication, integrity measurement, and remote authentication. Keys in the trusted platform module may be classified into migratable keys and non-migratable keys, where a root key SRK is a non-migratable key and serves as a basis for establishing a trust relationship, and a binding key is a migratable key. These keys are all asymmetric keys RSA. In this embodiment of the present invention, the root key is used as a parent key to encrypt and store a generated platform migratable key, and then the platform migratable key is used as a parent key to encrypt and store a user migratable key, thereby constructing a key tree, with a trust relationship existing between each node, and finally the root key ensures security of the keys in the whole tree.

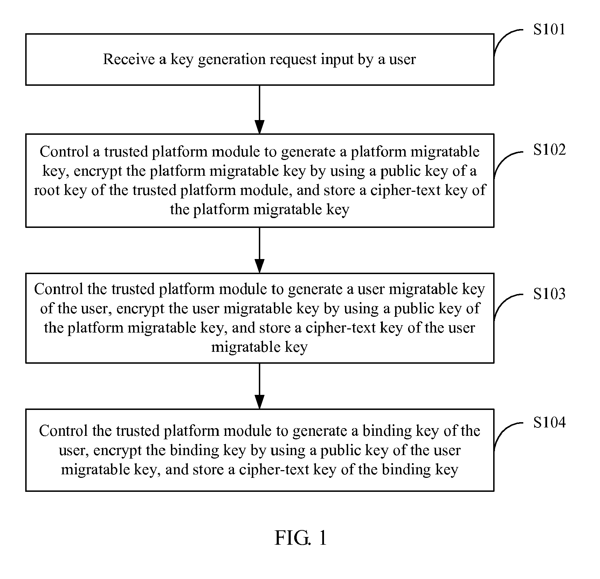

FIG. 1 is an implementation flowchart of a method for key generation based on trusted computing according to a first embodiment of the present invention. Details are as follows:

In step S101, a key generation request input by a user is received.

In step S102, a trusted platform module is controlled to generate a platform migratable key, the platform migratable key is encrypted by using a public key of a root key of the trusted platform module, and a cipher-text key of the platform migratable key is stored.

In this embodiment of the present invention, after the key generation request input by the user is received, an internal key generator in the trusted platform module is triggered to generate the platform migratable key, where the key is an RSA key; for the purpose of ensuring security of the key, the root key of the trusted platform module is used as a parent key, a private key of the platform migratable key is encrypted by using the public key of the root key to obtain a corresponding cipher-text key, and the cipher-text key is stored; in addition, an association relationship between the private key of the platform migratable key and a corresponding public key of the platform migratable key needs to be established. In a specific implementation process, the cipher-text key, obtained by encryption, of the platform migratable key may be exported and stored outside the trusted platform module, and may also be stored inside the trusted platform module. This may be specifically decided according to the capacity and security of an internal register of the trusted platform module.

In step S103, the trusted platform module is controlled to generate a user migratable key of the user, the user migratable key is encrypted by using a public key of the platform migratable key, and a cipher-text key of the user migratable key is stored.

In this embodiment of the present invention, the trusted platform module is further controlled to invoke its internal key generator to generate the user migratable key; the platform migratable key is used as a parent key, and the generated user migratable key is encrypted by using the public key of the platform migratable key; and the cipher-text key of the user migratable key is stored. Similarly, in a specific implementation process, the cipher-text key, obtained by encryption, of the user migratable key may be exported and stored outside the trusted platform module, and may also be stored inside the trusted platform module. This may be specifically decided by requirements for the capacity and security of the internal register of the trusted platform module.

In step S104, the trusted platform module is controlled to generate a binding key of the user, the binding key is encrypted by using a public key of the user migratable key, and a cipher-text key of the binding key is stored.

The binding key is an RSA key and is mainly used to encrypt a small amount of data, for example, used to encrypt symmetric keys. In this embodiment of the present invention, after the trusted platform module is controlled to generate the binding key of the user, the user migratable key is used as a parent key, and a private key of the generated binding key is encrypted and stored by using the public key of the user migratable key. Similarly, in a specific implementation process, the cipher-text key, obtained by encryption, of the binding key may be exported and stored outside the trusted platform module, and may also be stored inside the trusted platform module. This may be specifically decided according to the capacity of the internal register of the TMP.

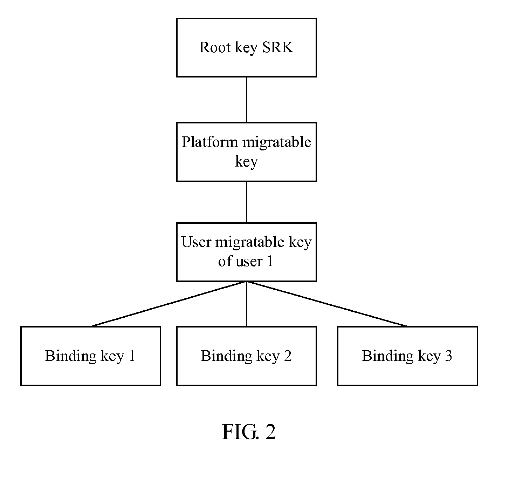

In this embodiment of the present invention, a trusted platform module is controlled to generate a platform migratable key, a user migratable key, and a binding key in sequence, and encryption and storage are performed layer by layer, thereby constructing a key tree. FIG. 2 shows a specific instance of the key tree, where the key tree includes a root key SRK, a platform migratable key, and a user migratable key and three binding keys of user 1.

### Embodiment 2

In this embodiment of the present invention, a key migration mode is set and migration authorization is performed on a generated key, thereby ensuring security of the generated key, preventing an unauthorized user from migrating the generated key, and further enhancing the security of the key.

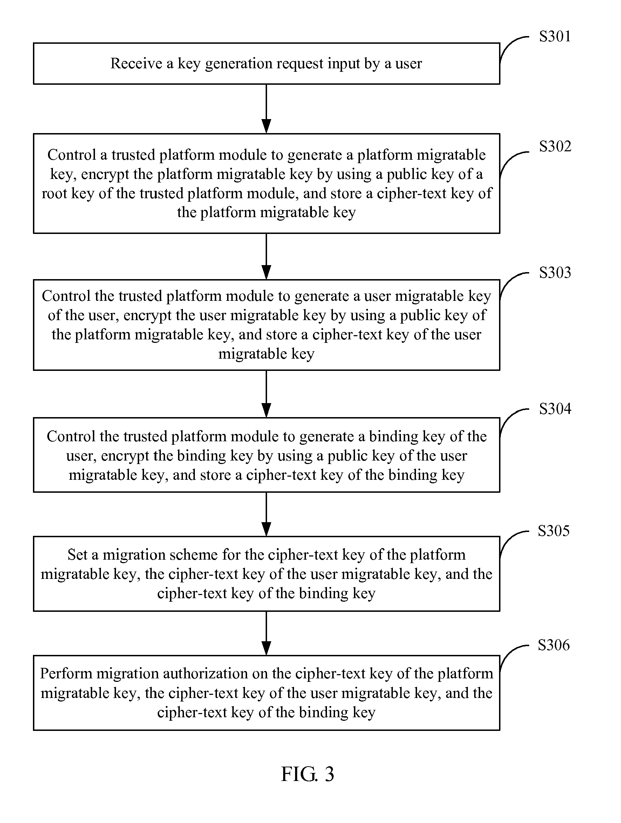

FIG. 3 is an implementation flowchart of a method for key generation based on trusted computing according to a second embodiment of the present invention. Details are as follows:

In step S301, a key generation request input by a user is received.

In step S302, a trusted platform module is controlled to generate a platform migratable key, the platform migratable key is encrypted by using a public key of a root key of the trusted platform module, and a cipher-text key of the platform migratable key is stored.

In step S303, the trusted platform module is controlled to generate a user migratable key of the user, the user migratable key is encrypted by using a public key of the platform migratable key, and a cipher-text key of the user migratable key is stored.

In step S304, the trusted platform module is controlled to generate a binding key of the user, the binding key is encrypted by using a public key of the user migratable key, and a cipher-text key of the binding key is stored.

In step S305, a migration scheme is set for the cipher-text key of the platform migratable key, the cipher-text key of the user migratable key, and the cipher-text key of the binding key, where the migration scheme is a backup scheme or a non-backup scheme.

In this embodiment of the present invention, the migration scheme of a generated key includes a backup scheme and a non-backup scheme, where the backup scheme means that the key can only be backed up to a specified backup device in backup scheme, and the non-backup scheme refers to general key migration, in which the key can be migrated from one device to another device. After the platform migratable key, the user migratable key, and the binding key are generated and stored in the form of cipher-text keys, a migration scheme can be set for each key, thereby ensuring that a corresponding migration scheme is used when a backup request of the user is received; in addition, corresponding prompt information is output to the user or a service request is rejected when a migration scheme is different from the set migration scheme, thereby enhancing the security of the key.

In step S306, migration authorization is performed on the cipher-text key of the platform migratable key, the cipher-text key of the user migratable key, and the cipher-text key of the binding key.

In this embodiment of the present invention, for the purpose of further enhancing the security of the keys, migration authorization is performed on the cipher-text key of the platform migratable key, the cipher-text key of the user migratable key, and the cipher-text key of the binding key; authorization may be performed on the generated keys on a unified basis or separately. Only an authorized user can perform key migration. In a specific implementation process, the authorization on key migration may be performed in the form of a password (for example, a user name/password), and the authorization may also be performed directly based on the TPM. When the authorization on key migration is performed based on the TPM, the following steps are specifically included:

Firstly, a public key provided by a trusted third party and platform integrity information of the trusted platform module are acquired.

Then, an OR operation is performed on the public key provided by the trusted third party, the platform integrity information, and set migration scheme information.

Finally, a digital digest of a result of the OR operation is generated, and the digital digest is set to corresponding migration authorization according to the migration scheme information of the cipher-text key of the platform migratable key, the cipher-text key of the user migratable key, and the cipher-text key of the binding key.

In this embodiment of the present invention, the platform integrity information of the trusted platform module refers to tpmProof information of the trusted platform module, where the tpmProof information is bound to the trusted platform module; so long as an owner of the trusted platform module changes, the tpmProof also changes; however, the public key provided by the trusted third party further ensures validity of the authorized user; when digital digest calculation is performed (by using an SHA-1 function of the TPM) on the result of the OR operation that is performed on the public key provided by the trusted third party, the platform integrity information, and the set migration scheme information, if the owner of the trusted platform module changes, the tpmProof also changes, and the digital digest also changes, thereby ensuring the validity of authorization in the lifecycle of the trusted platform module.

In a specific implementation process, a corresponding data structure may be established for the authorization and used to store the public key provided by the trusted third party, the platform integrity information of the trusted platform module, and the acquired migration scheme information. The public key provided by the trusted third party may be stored as a data certificate CA, and the trusted third party is an authoritative digital certificate management organization CA.

```
          struct TPM_MIGRATIONKEYAUTH {
          TPM_PUBKEY migrationKey;
          TPM_MIGRATE_SCHEME migrationScheme;
          TPM_DIGEST digest;
          } TPM_MIGRATIONKEYAUTH;
```

where, migrationKey refers to the public key provided by the trusted third party, migrationScheme refers to the set migration scheme of the migratable key, and digest = SHA-1 (migrationKey ∥ migrationScheme ∥ TPM_PERMANENT_DATA → tpmProof).

Only a specific instance of the data structure of the migration authorization is detailed above, and is not used to limit the present invention herein.

### Embodiment 3

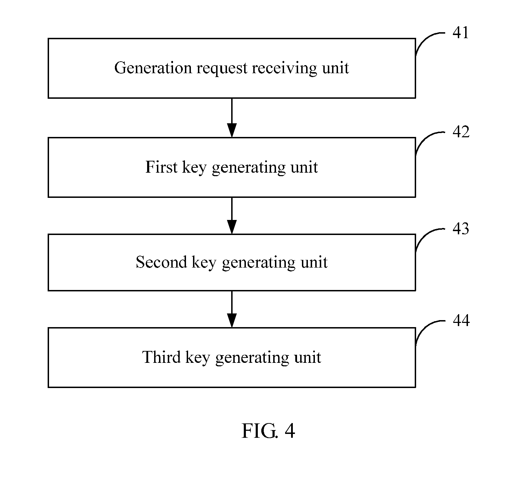

FIG. 4 illustrates a structure of a system for key generation based on trusted computing according to a third embodiment of the present invention. For the convenience of description, only parts related to this embodiment of the present invention are illustrated, where:

A generation request receiving unit 41 receives a key generation request input by a user. A first key generating unit 42 controls a trusted platform module to generate a platform migratable key, encrypts the platform migratable key by using a public key of a root key of the trusted platform module, and stores a cipher-text key of the platform migratable key.

A second key generating unit 43 controls the trusted platform module to generate a user migratable key of the user, encrypts the user migratable key by using a public key of the platform migratable key, and stores a cipher-text key of the user migratable key.

A third key generating unit 44 controls the trusted platform module to generate a binding key of the user, encrypts the binding key by using a public key of the user migratable key, and stores a cipher-text key of the binding key.

### Embodiment 4

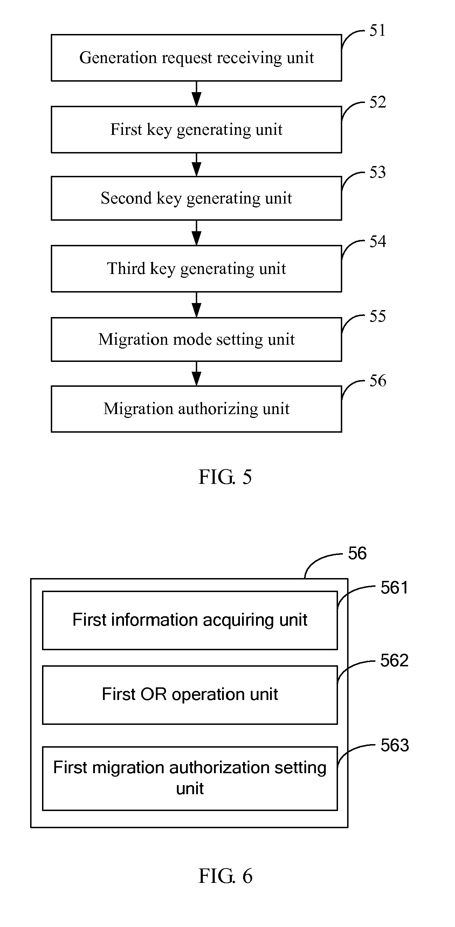

FIG. 5 illustrates a structure of a system for key generation based on trusted computing according to a fourth embodiment of the present invention. For the convenience of description, only parts related to this embodiment of the present invention are illustrated.

A generation request receiving unit 51 receives a key generation request input by a user.

A first key generating unit 52 controls a trusted platform module to generate a platform migratable key, encrypts the platform migratable key by using a public key of a root key of the trusted platform module, and stores a cipher-text key of the platform migratable key.

In this embodiment of the present invention, after the generation request receiving unit 51 receives the key generation request input by the user, the first key generating unit 52 triggers an internal key generator of the trusted platform module to generate a platform migratable key, where the key is an RSA key; for the purpose of ensuring security of the key, the root key of the trusted platform module is used as a parent key, and a private key of the platform migratable key is encrypted by using the public key of the root key to obtain a corresponding cipher-text key, and the cipher-text key is stored; in addition, an association relationship between the private key of the platform migratable key and a corresponding public key of the platform migratable key needs to be established. In a specific implementation process, the cipher-text key, obtained by encryption, of the platform migratable key may be exported and stored outside the trusted platform module, and may also be stored inside the trusted platform module.

A second key generating unit 53 controls the trusted platform module to generate a user migratable key of the user, encrypts the user migratable key by using a public key of the platform migratable key, and stores a cipher-text key of the user migratable key.

A third key generating unit 54 controls the trusted platform module to generate a binding key of the user, encrypts the binding key by using a public key of the user migratable key, and stores a cipher-text key of the binding key.

In this embodiment of the present invention, the second key generating unit 53 and the third key generating unit 54 control the trusted platform module to invoke the internal key generator of the trusted platform module to generate a user migratable key and a binding key, respectively, and perform encryption and storage. Similarly, in a specific implementation process, the cipher-text key obtained by encryption may be exported and stored outside the trusted platform module, and may also be stored inside the trusted platform module.

A migration scheme setting unit 55 sets a migration scheme for the cipher-text key of the platform migratable key, the cipher-text key of the user migratable key, and the cipher-text key of the binding key, where the migration scheme is a backup scheme or a non-backup scheme.

A migration authorizing unit 56 performs migration authorization on the cipher-text key of the platform migratable key, the cipher-text key of the user migratable key, and the cipher-text key of the binding key.

In this embodiment of the present invention, migration authorization is performed on the cipher-text key of the platform migratable key, the cipher-text key of the user migratable key, and the cipher-text key of the binding key; authorization may be performed on the generated keys on a unified basis or separately. Only an authorized user can perform key migration. In a specific implementation process, the authorization on key migration may be performed in the form of a password (for example, a user name/password), and the authorization may also be performed directly based on the trusted platform module. When the authorization on key migration is performed based on the trusted platform module, as shown in FIG. 6, the migration authorizing unit 56 specifically includes a first information acquiring unit 561, a first OR operation unit 562, and a first migration authorization setting unit 563, where:
the first information acquiring unit 561 is configured to acquire a public key provided by a trusted third party and platform integrity information of the trusted platform module;
the first OR operation unit 562 is configured to perform an OR operation on the public key provided by the trusted third party, the platform integrity information, and set migration scheme information; and
the first migration authorization setting unit 563 is configured to generate a digital digest of a result of the OR operation, and set the digital digest to corresponding migration authorization according to the migration scheme of the cipher-text key of the platform migratable key, the cipher-text key of the user migratable key, and the cipher-text key of the binding key.

### Embodiment 5

Because a key relates to security of encrypted data, in this embodiment of the present invention, after the key is generated, the key is backed up; during the backup, security of key backup is enhanced by using OAEP encoding, thereby further enhancing security of the key.

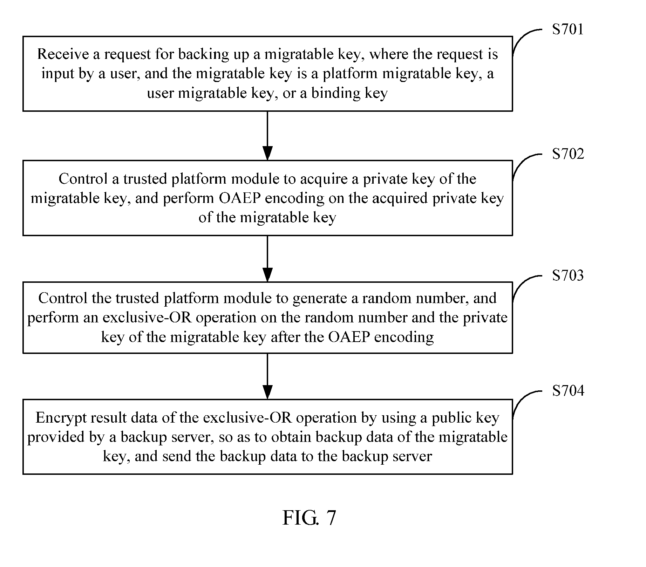

FIG. 7 is an implementation flowchart of a method for key backup based on trusted computing according to a fifth embodiment of the present invention. Details are as follows:

In step S701, a request for backing up a migratable key is received, where the request is input by a user, and the migratable key is a platform migratable key, a user migratable key, or a binding key.

In step S702, a trusted platform module is controlled to acquire a private key of the migratable key, and OAEP encoding is performed on the acquired private key of the migratable key.

In this embodiment of the present invention, after the request for backing up the migratable key is received, where the request is input by the user, the migratable key specified by the user needs to be firstly taken out from a generated key tree for decryption, where the decryption is performed layer by layer from a root key to the migratable key specified by the user; the private key of the migratable key specified by the user is decrypted to obtain a plain-text key of the migratable key; and then OAEP encoding is performed on the plain-text key. The OAEP encoding is defined in the RSA PKCS1 V2.1, and the OAEP encoding is performed on the plain-text key of the migratable key to avoid malicious alteration to the plain-text key.

In step S703, the trusted platform module is controlled to generate a random number, and an exclusive-OR operation is performed on the random number and the private key of the migratable key after the OAEP encoding.

In this embodiment of the present invention, after the trusted platform module is controlled to generate the random number, the exclusive-OR operation is performed on the random number and the private key of the migratable key after the OAEP encoding, and the random number is stored for a subsequent backup restoration operation.

In step S704, result data of the exclusive-OR operation is encrypted by using a public key provided by a backup server, so as to obtain backup data of the migratable key, and the backup data is sent to the backup server.

In this embodiment of the present invention, the public key of the backup server may be provided by a trusted third party, and may also be acquired by negotiation with the backup server; the result data of the exclusive-OR operation is encrypted by using the public key provided by the backup server, so as to obtain backup data of the migratable key, and the backup data is sent to the backup server. In this way, the backup of the migratable key is implemented, thereby enhancing the security of the key.

### Embodiment 6

During key backup, when authorization authentication needs to be performed on the key backup, authentication needs to be performed according to a specific authorization manner of a key. For example, when authorization on key migration is implemented in the form of a password (for example, a user name/password) or a certificate, the password or certificate provided by a user is authenticated during the backup. In this embodiment of the present invention, authorization authentication performed based on a trusted platform module is used as an embodiment for description. When a key is backed up according to user request information, migration authorization authentication is performed on a request for backing up a migratable key, where the request is input by the user, thereby ensuring security of the key backup.

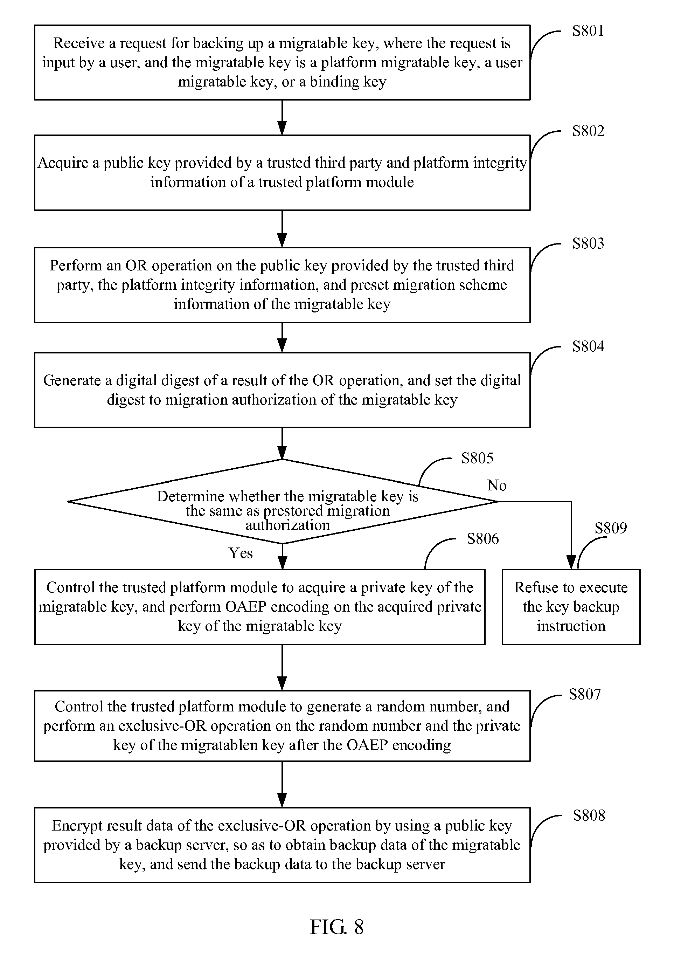

FIG. 8 illustrates an implementation process of a method for key backup based on trusted computing according to a sixth embodiment of the present invention. Details are as follows:

In step S801, a request for backing up a migratable key is received, where the request is input by a user, and the migratable key is a platform migratable key, a user migratable key, or a binding key.

In step S802, a public key provided by a trusted third party and platform integrity information of a trusted platform module are acquired.

In step S803, an OR operation is performed on the public key provided by the trusted third party, the platform integrity information, and preset migration scheme information of the migratable key, where the migration scheme is a non-backup scheme.

In step S804, a digital digest of a result of the OR operation is generated, and the digital digest is set to migration authorization of the migratable key.

In this embodiment of the present invention, the platform integrity information of the trusted platform module refers to tpmProof information of the trusted platform module, where the tpmProof information is bound to the trusted platform module; so long as an owner of the trusted platform module changes, the tpmProof also changes; however, the public key provided by the trusted third party further ensures validity of an authorized user; when digital digest is performed (by using an SHA-1 function of the trusted platform module) on the result of the OR operation that is performed on the public key provided by the trusted third party, the platform integrity information, and the set migration scheme information, if the owner of the trusted platform module changes, the tpmProof also changes, and the digital digest also changes, thereby ensuring the validity of authorization in the lifecycle of the trusted platform module.

In step S805, whether the migratable key is the same as prestored migration authorization is determined; if yes, step S806 is performed; otherwise, step S809 is performed.

In this embodiment of the present invention, whether the migration authorization obtained by calculation in step S804 is the same as the prestored migration authorization is determined; if the obtained migration authorization is the same as the prestored migration authorization, a next step of key backup is performed; otherwise, the key backup instruction is refused to be executed.

In step S806, the trusted platform module is controlled to acquire a private key of the migratable key, and OAEP encoding is performed on the acquired private key of the migratable key.

In this embodiment of the present invention, after the request for backing up the migratable key is received, where the request is input by the user, the migratable key specified by the user needs to be firstly taken out from a generated key tree for decryption, where the decryption is performed layer by layer from a root key to the migratable key specified by the user; the private key of the migratable key specified by the user is decrypted to obtain a plain-text key of the migratable key; and then OAEP encoding is performed on the plain-text key. The OAEP encoding is defined in the RSA PKCS1 V2.1, and the OAEP encoding is performed on the plain-text key of the migratable key to avoid malicious alteration to the plain-text key.

In step S807, the trusted platform module is controlled to generate a random number, and an exclusive-OR operation is performed on the random number and the private key of the migratable key after the OAEP encoding.

In step S808, result data of the exclusive-OR operation is encrypted by using a public key provided by a backup server, so as to obtain backup data of the migratable key, and the backup data is sent to the backup server.

In step S809, the key backup instruction is refused to be executed.

### Embodiment 7

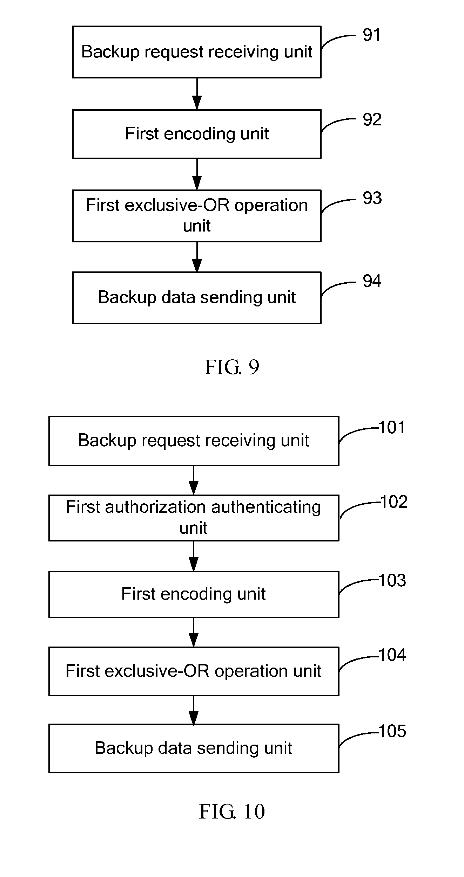

FIG. 9 illustrates a structure of a system for key backup based on trusted computing according to a seventh embodiment of the present invention. For the convenience of description, only parts related to this embodiment of the present invention are illustrated.

A backup request receiving unit 91 receives a request for backing up a migratable key, where the request is input by a user, and the migratable key is a platform migratable key, a user migratable key, or a binding key.

A first encoding unit 92 controls a trusted platform module to acquire a private key of the migratable key, and performs OAEP encoding on the acquired private key of the migratable key.

A first exclusive-OR operation unit 93 controls the trusted platform module to generate a random number, and performs an exclusive-OR operation on the random number and the private key of the migratable key after the OAEP encoding.

In this embodiment of the present invention, after the TPM is controlled to generate the random number, the exclusive-OR operation is performed on the random number and the private key of the migratable key after the OAEP encoding, and the random number is stored for a subsequent backup restoration operation.

A backup data sending unit 904 encrypts result data of the exclusive-OR operation by using a public key provided by a backup server, so as to obtain backup data of the migratable key, and sends the backup data to the backup server.

In this embodiment of the present invention, the public key of the backup server may be provided (for example, in the form of a certificate) by a trusted third party, and may also be obtained by negotiation with the backup server; finally, the result data of the exclusive-OR operation is encrypted by using the public key provided by the backup server, so as to obtain the backup data of the migratable key, and the backup data is sent to the backup server. In this way, the backup of the migratable key is implemented.

### Embodiment 8

FIG. 10 illustrates a structure of a system for key backup based on trusted computing according to an eighth embodiment of the present invention. For the convenience of description, only parts related to this embodiment of the present invention are illustrated, where:

A backup request receiving unit 101 receives a request for backing up a migratable key, where the request is input by a user, and the migratable key is a platform migratable key, a user migratable key, or a binding key.

A first authorization authenticating unit 102 performs migration authorization authentication on the request for backing up the migratable key, where the request is input by the user.

A first encoding unit 103 controls a trusted platform module to acquire a private key of the migratable key, and performs OAEP encoding on the acquired private key of the migratable key.

A first exclusive-OR operation unit 104 controls the trusted platform module to generate a random number, and performs an exclusive-OR operation on the random number and the private key of the migratable key after the OAEP encoding.

A backup data sending unit 105 encrypts result data of the exclusive-OR operation by using a public key provided by a backup server, so as to obtain backup data of the migratable key, and sends the backup data to the backup server.

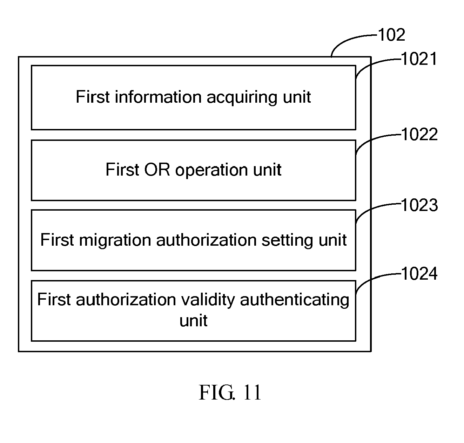

In this embodiment of the present invention, platform integrity information of the trusted platform module refers to tpmProof information of the trusted platform module, where the tpmProof information is bound to the trusted platform module; so long as an owner of the trusted platform module changes, the tpmProof also changes; however, a public key provided by a trusted third party further ensures validity of an authorized user; when digital digest is performed (by using an SHA-1 function of the trusted platform module) on a result of an OR operation that is performed on the public key provided by the trusted third party, the platform integrity information, and set migration scheme information, if the owner of the trusted platform module changes, the tpmProof also changes, and the digital digest also changes, thereby ensuring the validity of authorization in the lifecycle of the TPM. Therefore, in a specific implementation process, as shown in FIG. 11, the first authorization authenticating unit 102 includes a first information acquiring unit 1021, a first OR operation unit 1022, a first migration authorization setting unit 1023, and a first authorization validity authenticating unit 1024, where:
the first information acquiring unit 1021 is configured to acquire the public key provided by the trusted third party and the platform integrity information of the trusted platform module;
the first OR operation unit 1022 is configured to perform the OR operation on the public key provided by the trusted third party, the platform integrity information, and preset migration scheme information of the migratable key, where the migration scheme is a backup scheme;
the first migration authorization setting unit 1023 is configured to generate a digital digest of the result of the OR operation, and set the digital digest to migration authorization of the migratable key; and
the first authorization validity authenticating unit 1024 is configured to compare the set migratable key with prestored migration authorization to determine validity of the migration authorization.

### Embodiment 9

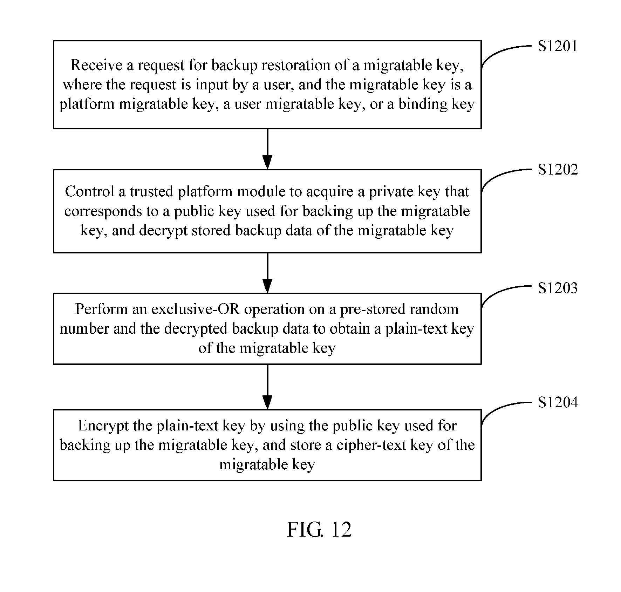

FIG. 12 illustrates an implementation process of a method for key backup restoration based on trusted computing according to a ninth embodiment of the present invention. Details are as follows:

In step S1201, a request for backup restoration of a migratable key is received, where the request is input by a user, and the migratable key is a platform migratable key, a user migratable key, or a binding key.

In this embodiment of the present invention, a backup key to be restored is stored in the form of cipher-text data, where the cipher-text data is obtained by encrypting, after an exclusive-OR operation is performed on the key after OAEP encoding and a random number generated by a TPM, result data of the exclusive-OR operation by using a public key of a backup server.

In step S1202, the trusted platform module is controlled to acquire a private key that corresponds to a public key for backing up the migratable key, and stored backup data of the migratable key is decrypted.

In this embodiment of the present invention, a private key that corresponds to a public key used for external layer encryption during key backup is acquired first, where the private key is stored in the form of a cipher-text key. Therefore, a trusted platform module of a restoration device needs to be controlled to take out a corresponding public key from a key tree to decrypt the cipher-text key, so as to acquire the public key used for external layer encryption during the key backup, and finally the stored backup data of the migratable key is decrypted.

In step S1203, an exclusive-OR operation is performed on a prestored random number and the decrypted backup data to obtain a plain-text key of the migratable key.

In this embodiment of the present invention, the exclusive-OR operation is performed on the prestored random number and the decrypted backup data to obtain the plain-text key of the migratable key, where the random number is used and stored when the migratable key is backed up.

In step S1204, the plain-text key is encrypted by using the public key used for backing up the migratable key, and the cipher-text key of the migratable key is stored.

In this embodiment of the present invention, after the backup migratable key is obtained, the plain-text key is encrypted by using the public key used for backing up the migratable key, and the cipher-text key of the migratable key is stored. In this way, the migratable key is added to the key tree of the trusted platform module in the restoration device, and security of the key is ensured during the restoration.

### Embodiment 10

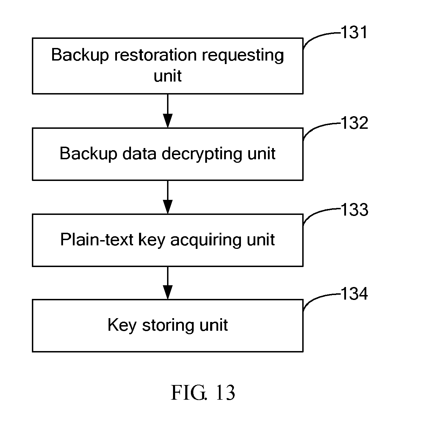

FIG. 13 illustrates a structure of a system for key backup restoration based on trusted computing according to a tenth embodiment of the present invention. For the convenience of description, only parts related to this embodiment of the present invention are illustrated, where:

A backup restoration requesting unit 131 receives a request for backup restoration of a migratable key, where the request is input by a user, and the migratable key is a platform migratable key, a user migratable key, or a binding key.

In this embodiment of the present invention, a backup key to be restored is stored in the form of cipher-text data, where the cipher-text data is obtained by encrypting, after an exclusive-OR operation is performed on the key after OAEP encoding and a random number generated by a trusted platform module, result data of the exclusive-OR operation by using a public key of a backup server.

A backup data decrypting unit 132 controls the trusted platform module to acquire a private key that corresponds to a public key used for backing up the migratable key, and decrypts stored backup data of the migratable key.

In this embodiment of the present invention, a private key that corresponds to a public key used for external layer encryption during key backup is acquired first, where the private key is stored in the form of a cipher-text key. Therefore, a trusted platform module of a restoration device needs to be controlled to take out a corresponding public key from a key tree to decrypt the cipher-text key, so as to acquire the public key used for external layer encryption during the key backup, and finally the stored backup data of the migratable key is decrypted.

A plain-text key acquiring unit 133 performs an exclusive-OR operation on a prestored random number and the decrypted backup data to acquire a plain-text key of the migratable key.

A key storing unit 134 encrypts the plain-text key by using the public key used for backing up the migratable key, and stores the cipher-text key of the migratable key.

### Embodiment 11

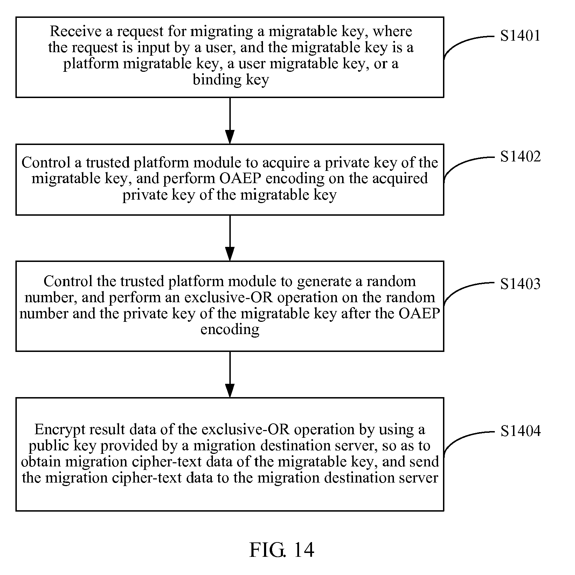

FIG. 14 illustrates an implementation process of a method for key migration based on trusted computing according to an eleventh embodiment of the present invention. Details are as follows:

In step S1401, a request for migrating a migratable key is received, where the request is input by a user, and the migratable key is a platform migratable key, a user migratable key, or a binding key.

In step S1402, a trusted platform module is controlled to acquire a private key of the migratable key, and OAEP encoding is performed on the acquired private key of the migratable key.

In this embodiment of the present invention, after the request for migrating the migratable key is received, where the request is input by the user, the migratable key specified by the user needs to be firstly taken out from a generated key tree for decryption, where the decryption is performed layer by layer from a root key to the migratable key specified by the user; the private key of the migratable key specified by the user is decrypted to obtain a plain-text key of the migratable key; and then OAEP encoding is performed on the plain-text key. The OAEP encoding is defined in the RSA PKCS1 V2.1, and the OAEP encoding is performed on the plain-text key of the migratable key to avoid malicious alteration to the plain-text key.

In step S1403, the trusted platform module is controlled to generate a random number, and an exclusive-OR operation is performed on the random number and the private key of the migratable key after the OAEP encoding.

In this embodiment of the present invention, after the TPM is controlled to generate the random number, the exclusive-OR operation is performed on the random number and the private key of the migratable key after the OAEP encoding, and the random number is stored for subsequent backup restoration.

In step S1404, result data of the exclusive-OR operation is encrypted by using a public key provided by a migration destination server, so as to obtain migration cipher-text data of the migratable key, and the migration cipher-text data is sent to the migration destination server.

In this embodiment of the present invention, the public key of the destination server may be provided by a trusted third party, and may also be obtained by negotiation with the destination server; and finally result data of the exclusive-OR operation is encrypted by using the public key provided by the destination server, and the encrypted data is sent to the destination server. In this way, the migration of the migratable key is completed. In addition, during the migration, the key is encrypted before being sent, which effectively enhances security of the key.

### Embodiment 12

During key migration, when authorization authentication needs to be performed on the key migration, authentication needs to be performed according to a specific authorization manner of a key. For example, when the authorization on key migration is implemented in the form of a password (for example, a user name/password) or a certificate, the password or certificate provided by a user is authenticated during the migration. In this embodiment of the present invention, authorization authentication performed based on a trusted platform module is used as an embodiment for description. When the key is migrated according to user migration request information, migration authorization authentication is performed on a request for migrating a migratable key, where the request is input by the user, thereby ensuring security of the key migration.

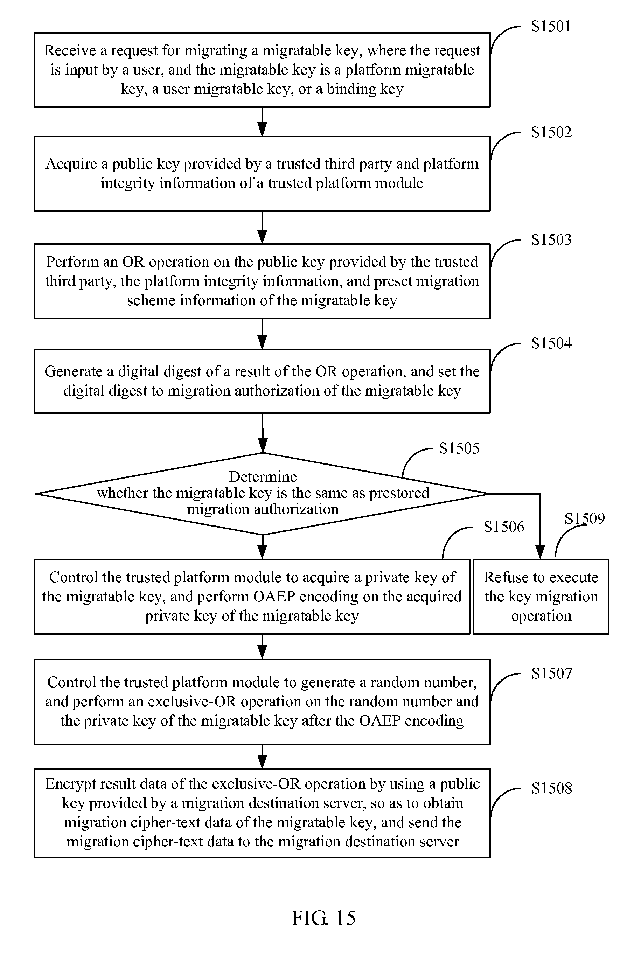

FIG. 15 illustrates an implementation process of a method for key generation based on trusted computing according to a twelfth embodiment of the present invention. Details are as follows:

In step S1501, a request for migrating a migratable key is received, where the request is input by a user, and the migratable key is a platform migratable key, a user migratable key, or a binding key.

In step S 1502, a public key provided by a trusted third party and platform integrity information of a trusted platform module are acquired.

In step S1503, an OR operation is performed on the public key provided by the trusted third party, the platform integrity information, and preset migration scheme information of the migratable key, where the migration scheme is a non-backup scheme.

In step S1504, a digital digest of a result of the OR operation is generated, and the digital digest is set to migration authorization of the migratable key.

In this embodiment of the present invention, the platform integrity information of the trusted platform module refers to tpmProof information of the trusted platform module, where the tpmProof information is bound to the trusted platform module; so long as an owner of the trusted platform module changes, the tpmProof also changes; however, the public key provided by the trusted third party further ensures validity of an authorized user; when digital digest is performed (by using an SHA-1 function of the trusted platform module) on the result of the OR operation that is performed on the public key provided by the trusted third party, the platform integrity information, and the set migration scheme information, if the owner of the trusted platform module changes, the tpmProof also changes, and the digital digest also changes, thereby ensuring the validity of authorization in the lifecycle of the trusted platform module.

In step S1505, whether the migratable key is the same as prestored migration authorization is determined; if yes, step S1506 is performed; otherwise, step S1509 is performed.

In this embodiment of the present invention, whether the migration authorization obtained by calculation in step S1504 is the same as the prestored migration authorization is determined; if the obtained migration authorization is the same as the prestored migration authorization, a next step of key migration is performed; otherwise, the key migration request is refused to be executed.

In step S1506, the trusted platform module is controlled to acquire a private key of the migratable key, and OAEP encoding is performed on the acquired private key of the migratable key.

In step S1507, the trusted platform module is controlled to generate a random number, and an exclusive-OR operation is performed on the random number and the private key of the migratable key after the OAEP encoding.

In step S1508, result data of the exclusive-OR operation is encrypted by using a public key provided by a migration destination server, so as to obtain migration cipher-text data of the migratable key, and the migration cipher-text data is sent to the migration destination server.

In step S1509, the key migration request input by the user is refused to be executed.

In this embodiment of the present invention, authorization authentication is performed on the key migration request input by the user before the key migration is implemented, which greatly enhances security of data.

### Embodiment 13

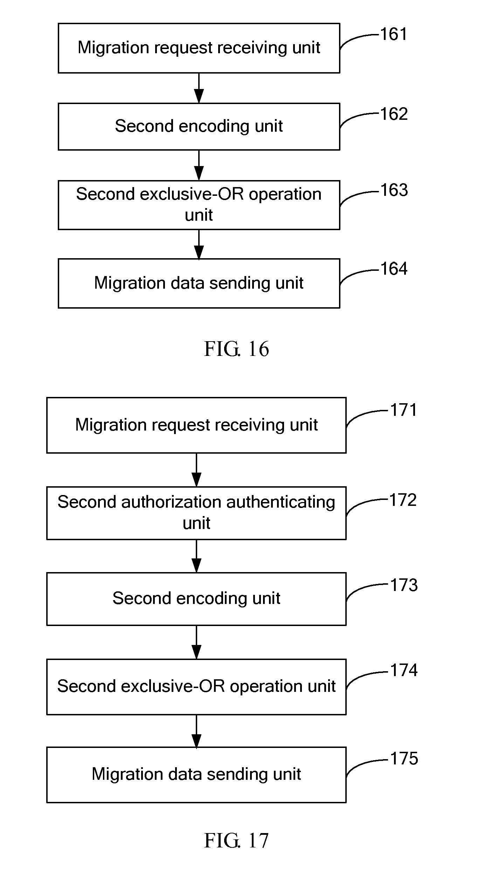

FIG. 16 illustrates a structure of a system for key migration based on trusted computing according to a thirteenth embodiment of the present invention. For the convenience of description, only parts related to this embodiment of the present invention are illustrated, where:

A migration request receiving unit 161 receives a request for migrating a migratable key, where the request is input by a user, and the migratable key is a platform migratable key, a user migratable key, or a binding key.

A second encoding unit 162 controls a trusted platform module to acquire a private key of the migratable key, and performs OAEP encoding on the acquired private key of the migratable key.

A second exclusive-OR operation unit 163 controls the trusted platform module to generate a random number, and performs an exclusive-OR operation on the random number and the private key of the migratable key after the OAEP encoding.

A migration data sending unit 164 encrypts result data of the exclusive-OR operation by using a public key provided by a migration destination server, so as to obtain migration cipher-text data of the migratable key, and sends the migration cipher-text data to the migration destination server.

### Embodiment 14

FIG. 17 illustrates a structure of a system for key migration based on trusted computing according to a fourteenth embodiment of the present invention. For the convenience of description, only parts related to this embodiment of the present invention are illustrated, where:

A migration request receiving unit 171 receives a request for migrating a migratable key, where the request is input by a user, and the migratable key is a platform migratable key, a user migratable key, or a binding key.

A second authorization authenticating unit 172 performs migration authorization authentication on the request for migrating the migratable key, where the request is input by the user.

A second encoding unit 173 controls a trusted platform module to acquire a private key of the migratable key, and performs OAEP encoding on the acquired private key of the migratable key.

A second exclusive-OR operation unit 174 controls the trusted platform module to generate a random number, and performs an exclusive-OR operation on the random number and the private key of the migratable key after the OAEP encoding.

A migration data sending unit 175 encrypts result data of the exclusive-OR operation by using a public key provided by a migration destination server, so as to obtain migration cipher-text data of the migratable key, and sends the migration cipher-text data to the migration destination server.

During the key migration, when authorization authentication needs to be performed on the key migration, authentication needs to be performed according to a specific authorization manner of a key. For example, when the authorization on key migration is implemented in the form of a password (for example, a user name/password) or a certificate, the password or certificate provided by a user is authenticated during the migration. In this embodiment of the present invention, authorization authentication performed based on the trusted platform module is used as an embodiment for description. When the key is migrated according to user migration request information, migration authorization authentication is performed on the request for migrating the migratable key, where the request is input by the user, thereby ensuring security of the key migration. Therefore, the second authorization authenticating unit 172 specifically includes a second information acquiring unit 1721, a second OR operation unit 1722, a second migration authorization setting unit 1723, and a second authorization validity authenticating unit 1724, where:
the second information acquiring unit 1721 is configured to acquire a public key provided by a trusted third party and platform integrity information of the trusted platform module;
the second OR operation unit 1722 is configured to perform an OR operation on the public key provided by the trusted third party, the platform integrity information, and preset migration scheme information of the migratable key, where the migration scheme is a non-backup scheme;
the second migration authorization setting unit 1723 is configured to generate a digital digest of a result of the OR operation, and set the digital digest to migration authorization of the migratable key; and
the second authorization validity authenticating unit 1724 is configured to compare the set migratable key with prestored migration authorization to determine validity of the migration authorization.

Persons of ordinary skill in the art may understand that all or a part of the steps of the methods in the embodiments may be implemented by a program instructing relevant hardware. The program may be stored in a computer readable storage medium, such as a ROM/RAM, a magnetic disk, and an optical disk.

In the embodiments of the present invention, key generation, backup, restoration, and migration are implemented by using a trusted computing module based on trusted computing; layer-by-layer encryption and storage of a generated key is implemented by using a root key of the trusted computing module, thereby ensuring security of the generated key; the security of the key during the backup and migration is ensured by using OAEP encoding and encryption technologies; and security of a restored key is ensured by using decryption, a random number, an exclusive-OR operation, an encryption technology, and the like during the key restoration.

The foregoing descriptions are merely exemplary embodiments of the present invention, but are not intended to limit the present invention. Any modifications, equivalent substitutions, and improvements made within the spirit and principle of the present invention shall fall within the protection scope of the present invention.

## Claims

1. A method for key generation based on trusted computing, comprising:
receiving a key generation request input by a user;
controlling a trusted platform module to generate a platform migratable key, encrypting the platform migratable key by using a public key of a root key of the trusted platform module, and storing a cipher-text key of the platform migratable key;
controlling the trusted platform module to generate a user migratable key of the user, encrypting the user migratable key by using a public key of the platform migratable key, and storing a cipher-text key of the user migratable key; and
controlling the trusted platform module to generate a binding key of the user, encrypting the binding key by using a public key of the user migratable key, and storing a cipher-text key of the binding key.

2. The method according to claim 1, further comprising:
setting a migration scheme for the cipher-text key of the platform migratable key, the cipher-text key of the user migratable key, and the cipher-text key of the binding key, wherein the migration scheme is a backup scheme or a non-backup scheme.

3. The method according to claim 2, further comprising:
performing migration authorization on the cipher-text key of the platform migratable key, the cipher-text key of the user migratable key, and the cipher-text key of the binding key.

4. The method according to claim 3, wherein the performing migration authorization on the cipher-text key of the platform migratable key, the cipher-text key of the user migratable key, and the cipher-text key of the binding key comprises:
acquiring a public key provided by a trusted third party and platform integrity information of the trusted platform module;
performing an OR operation on the public key provided by the trusted third party, the platform integrity information, and set migration scheme information; and
generating a digital digest of a result of the OR operation, and setting the digital digest to corresponding migration authorization according to the migration scheme information of the cipher-text key of the platform migratable key, the cipher-text key of the user migratable key, and the cipher-text key of the binding key.

5. A system for key generation based on trusted computing, comprising:
a generation request receiving unit, configured to receive a key generation request input by a user;
a first key generating unit, configured to control a trusted platform module to generate a platform migratable key, encrypt the platform migratable key by using a public key of a root key of the trusted platform module, and store a cipher-text key of the platform migratable key;
a second key generating unit, configured to control the trusted platform module to generate a user migratable key of the user, encrypt the user migratable key by using a public key of the platform migratable key, and store a cipher-text key of the user migratable key; and
a third key generating unit, configured to control the trusted platform module to generate a binding key of the user, encrypt the binding key by using a public key of the user migratable key, and store a cipher-text key of the binding key.

6. The system according to claim 5, further comprising:
a migration scheme setting unit, configured to set a migration scheme for the cipher-text key of the platform migratable key, the cipher-text key of the user migratable key, and the cipher-text key of the binding key, wherein the migration scheme is a backup scheme or a non-backup scheme.

7. The system according to claim 5, further comprising:
a migration authorizing unit, configured to perform migration authorization on the cipher-text key of the platform migratable key, the cipher-text key of the user migratable key, and the cipher-text key of the binding key.

8. The system according to claim 7, wherein the migration authorizing unit specifically comprises:
a first information acquiring unit, configured to acquire a public key provided by a trusted third party and platform integrity information of the trusted platform module;
a first OR operation unit, configured to perform an OR operation on the public key provided by the trusted third party, the platform integrity information, and set migration scheme information; and
a first migration authorization setting unit, configured to generate a digital digest of a result of the OR operation, and set the digital digest to corresponding migration authorization according to the migration scheme of the cipher-text key of the platform migratable key, the cipher-text key of the user migratable key, and the cipher-text key of the binding key.

9. A method for key backup based on trusted computing, comprising the following steps:
receiving a request for backing up a migratable key, wherein the request is input by a user, and the migratable key is a platform migratable key, a user migratable key, or a binding key;
controlling a trusted platform module to acquire a private key of the migratable key, and performing OAEP encoding on the acquired private key of the migratable key;
controlling the trusted platform module to generate a random number, and performing an exclusive-OR operation on the random number and the private key of the migratable key after the OAEP encoding; and
encrypting result data of the exclusive-OR operation by using a public key provided by a backup server, so as to obtain backup data of the migratable key, and sending the backup data to the backup server.

10. The method according to claim 9, wherein after the step of receiving a request for backing up a migratable key, wherein the request is input by a user, and before the step of controlling a trusted platform module to acquire a private key of the migratable key and performing OAEP encoding on the acquired private key of the migratable key, the method further comprises the following step:
performing migration authorization authentication on the request for backing up the migratable key, wherein the request is input by the user.

11. The method according to claim 9, wherein the step of performing migration authorization authentication on the request for backing up the migratable key, wherein the request is input by the user, specifically comprises the following steps:
acquiring a public key provided by a trusted third party and platform integrity information of the trusted platform module;
performing an OR operation on the public key provided by the trusted third party, the platform integrity information, and preset migration scheme information of the migratable key, wherein the migration scheme is a backup scheme;
generating a digital digest of a result of the OR operation, and setting the digital digest to migration authorization of the migratable key; and
comparing the migratable key with prestored migration authorization to determine validity of the migration authorization.

12. A system for key backup based on trusted computing, comprising:
a backup request receiving unit, configured to receive a request for backing up a migratable key, wherein the request is input by a user, and the migratable key is a platform migratable key, a user migratable key, or a binding key;
a first encoding unit, configured to control a trusted platform module to acquire a private key of the migratable key, and perform OAEP encoding on the acquired private key of the migratable key;
a first exclusive-OR operation unit, configured to control the trusted platform module to generate a random number, and perform an exclusive-OR operation on the random number and the private key of the migratable key after the OAEP encoding; and
a backup data sending unit, configured to encrypt result data of the exclusive-OR operation by using a public key provided by a backup server, so as to obtain backup data of the migratable key, and send the backup data to the backup server.

13. The system according to claim 12, further comprising:
a first authorization authenticating unit, configured to perform migration authorization authentication on the request for backing up the migratable key, wherein the request is input by the user.

14. The system according to claim 13, wherein the first authorization authenticating unit specifically comprises:
a first information acquiring unit, configured to acquire a public key provided by a trusted third party and platform integrity information of the trusted platform module;
a first OR operation unit, configured to perform an OR operation on the public key provided by the trusted third party, the platform integrity information, and preset migration scheme information of the migratable key, wherein the migration scheme is a backup scheme;
a first migration authorization setting unit, configured to generate a digital digest of a result of the OR operation, and set the digital digest to migration authorization of the migratable key; and
a first authorization validity authenticating unit, configured to compare the set migratable key with prestored migration authorization to determine validity of the migration authorization.

15. A method for key backup restoration based on trusted computing, comprising the following steps:
receiving a request for backup restoration of a migratable key, wherein the request is input by a user, and the migratable key is a platform migratable key, a user migratable key, or a binding key;
controlling a trusted platform module to acquire a private key that corresponds to a public key used for backing up the migratable key, and decrypting stored backup data of the migratable key;
performing an exclusive-OR operation on a prestored random number and the decrypted backup data to obtain a plain-text key of the migratable key; and
encrypting the plain-text key by using the public key used for backing up the migratable key, and storing a cipher-text key of the migratable key.

16. A system for key backup restoration based on trusted computing, comprising:
a backup restoration requesting unit, configured to receive a request for backup restoration of a migratable key, wherein the request is input by a user, and the migratable key is a platform migratable key, a user migratable key, or a binding key;
a backup data decrypting unit, configured to control a trusted platform module to acquire a private key that corresponds to a public key used for backing up the migratable key, and decrypt stored backup data of the migratable key;
a plain-text key acquiring unit, configured to perform an exclusive-OR operation on a prestored random number and the decrypted backup data to acquire a plain-text key of the migratable key; and
a key storing unit, configured to encrypt the plain-text key by using the public key used for backing up the migratable key, and store a cipher-text key of the migratable key.

17. A method for key migration based on trusted computing, comprising the following steps:
receiving a request for migrating a migratable key, wherein the request is input by a user, and the migratable key is a platform migratable key, a user migratable key, or a binding key;
controlling a trusted platform module to acquire a private key of the migratable key, and performing OAEP encoding on the acquired private key of the migratable key;
controlling the trusted platform module to generate a random number, and performing an exclusive-OR operation on the random number and the private key of the migratable key after the OAEP encoding; and
encrypting result data of the exclusive-OR operation by using a public key provided by a migration destination server, so as to obtain migration cipher-text data of the migratable key, and sending the migration cipher-text data to the migration destination server.

18. The method according to claim 17, wherein after the step of receiving a request for migrating a migratable key, wherein the request is input by a user, and before the step of controlling a trusted platform module to acquire a private key of the migratable key and performing OAEP encoding on the acquired private key of the migratable key, the method further comprises the following step:
performing migration authorization authentication on the request for migrating the migratable key, wherein the request is input by the user.

19. The method according to claim 18, wherein the step of performing migration authorization authentication on the request for migrating the migratable key, wherein the request is input by the user, specifically comprises the following steps:
acquiring a public key provided by a trusted third party and platform integrity information of the trusted platform module;
performing an OR operation on the public key provided by the trusted third party, the platform integrity information, and preset migration scheme information of the migratable key, wherein the migration scheme is a non-backup scheme;
generating a digital digest of a result of the OR operation, and setting the digital digest to migration authorization of the migratable key; and
comparing the migratable key with prestored migration authorization to determine validity of the migration authorization.

20. A system for key migration based on trusted computing, comprising:
a migration request receiving unit, configured to receive a request for migrating a migratable key, wherein the request is input by a user, and the migratable key is a platform migratable key, a user migratable key, or a binding key;
a second encoding unit, configured to control a trusted platform module to acquire a private key of the migratable key, and perform OAEP encoding on the acquired private key of the migratable key;
a second exclusive-OR operation unit, configured to control the trusted platform module to generate a random number, and perform an exclusive-OR operation on the random number and the private key of the migratable key after the OAEP encoding; and
a migration data sending unit, configured to encrypt result data of the exclusive-OR operation by using a public key provided by a migration destination server, so as to obtain migration cipher-text data of the migratable key, and send the migration cipher-text data to the migration destination server.

21. The system according to claim 20, further comprising:
a second authorization authenticating unit, configured to perform migration authorization authentication on the request for migrating the migratable key, wherein the request is input by the user.

22. The system according to claim 21, wherein the third authorization authenticating unit specifically comprises:
a second information acquiring unit, configured to acquire a public key provided by a trusted third party and platform integrity information of the trusted platform module;
a second OR operation unit, configured to perform an OR operation on the public key provided by the trusted third party, the platform integrity information, and preset migration scheme information of the migratable key, wherein the migration scheme is a non-backup scheme;
a second migration authorization setting unit, configured to generate a digital digest of a result of the OR operation, and set the digital digest to migration authorization of the migratable key; and
a second authorization validity authenticating unit, configured to compare the set migratable key with prestored migration authorization to determine validity of the migration authorization.
